# EUROPEAN PATENT SPECIFICATION

(11) **EP 2 384 064 B1**
(45) Date of publication and mention of the grant of the patent: **21.12.2016**
(21) Application number: 09838613.9
(22) Date of filing: 22.01.2009
(51) Int. Cl.: H04W 52/50, H04W 52/28, H04W 52/36, H04W 52/34

(54) **METHOD, SYSTEM AND DEVICE FOR ENHANCING THE UPLINK COVERAGE CAPACITY OF THE USER EQUIPMENT**
VERFAHREN, SYSTEM UND VORRICHTUNG ZUR ERWEITERUNG DER UPLINK-ABDECKUNGSKAPAZITÄT EINES BENUTZERGERÄTS
PROCÉDÉ, SYSTÈME ET DISPOSITIF POUR AMÉLIORER LA CAPACITÉ DE COUVERTURE EN LIAISON MONTANTE DE L'ÉQUIPEMENT UTILISATEUR

(43) Date of publication of application: 02.11.2011
(73) Proprietor: Huawei Technologies Co., Ltd., Longgang District Shenzhen, Guangdong 518129 (CN)
(72) Inventor: YAN, Kun, Guangdong 518129 (CN); ZHOU, Zhen, Guangdong 518129 (CN); ZHENG, Xiaoxiao, Guangdong 518129 (CN); GAO, Yongqiang, Guangdong 518129 (CN); WANG, Xiaoxia, Guangdong 518129 (CN); WANG, Hongwei, Guangdong 518129 (CN); MA, Xueli, Guangdong 518129 (CN); DAI, Dingzhang, Guangdong 518129 (CN); GUO, Fangfu, Guangdong 518129 (CN); YU, Jiang, Guangdong 518129 (CN); ZHANG, Jingrong, Guangdong 518129 (CN); ZHANG, Yi, Guangdong 518129 (CN)
(74) Representative: Epping - Hermann - Fischer
(86) International application number: PCT/CN2009/070268
(87) International publication number: WO 2010/083646

(56) References cited:
- WO-A1-2008/131262
- CN-A- 1 619 973
- CN-A- 101 174 860
- CN-A- 101 340 413
- LG ELECTRONICS: "Node B scheduling with transmit power restriction for E-DCH", 3GPP DRAFT; R1-041194_EDCH_SCHEDULING WITH POWER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20040916, 16 September 2004 (2004-09-16), XP050099390, [retrieved on 2004-09-16]
- "3rd Generation Partnership Project; Technical Specification Group Radio Access Network; FDD Enhanced Uplink; Overall description; Stage 2 (Release 6)", 3GPP STANDARD; 3GPP TS 25.309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.6.0, 1 March 2006 (2006-03-01), pages 1-34, XP050367622,
- "3rd Generation Partnership Project; Technical Specification Group Radio Access Network; Physical layer procedures (FDD) (Release 9)", 3GPP STANDARD; 3GPP TS 25.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 12 December 2009 (2009-12-12), pages 1-98, XP050400772, [retrieved on 2009-12-12]
- "3rd Generation Partnership Project; Technical Specification Group Radio Access Network; Physical channels and mapping of transport channels onto physical channels (FDD) (Release 9)", 3GPP STANDARD; 3GPP TS 25.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 11 December 2009 (2009-12-11), pages 1-58, XP050400720, [retrieved on 2009-12-11]

## Description

### FIELD OF THE INVENTION

The present invention relates to communication technologies, and in particular, to a method and an apparatus for enhancing uplink coverage capacity of a User Equipment (UE).

### BACKGROUND OF THE INVENTION

High speed uplink packet access (HSUPA, high speed uplink packet access) is optimization and evolution for packet services in an uplink direction (from a mobile terminal to a radio access network). The HSUPA uses adaptive coding, physical-layer hybrid retransmission, base station (Node B)-based fast scheduling, and short frame transmission with a 2 ms Transmission Time Interval (TTI, Transmission Time Interval) to achieve enhancements in the highest data transmission rate, cell throughput, and delay.

When the total transmit power of a UE reaches the maximum transmit power, it is considered that the UE is in a power-limited state. Under this circumstance, the power gain factor of the Enhanced Dedicated Physical Data Channel (E-DPDCH, E-DCH Dedicated Physical Data Channel) is reduced to the minimum value, where the minimum value is configurable. After the power gain factor of the E-DPDCH is reduced to the minimum value, the power of a control channel and a data channel is adjusted proportionally. Due to the reduction of the power gain factor of the E-DPDCH, the decoding of the sent packets fails when the maximum number of retransmission times of Hybrid Automatic Repeat Request (HARQ, Hybrid Automatic Repeat Request) is reached. When a Radio Resource Controller (RNC, Radio Resource Controller) finds that the UE is in the power-limited state, the RNC

does not increase the target Signal-to-Interference Ratio (SIR) value even in the case that the NodeB reports a great number of HARQ retransmission times.

In the prior art, the uplink coverage capacity of a UE is enhanced in this way: When the information reported by a UE to the network includes that the transmit power of the UE reaches the allowed maximum transmit power, the RNC determines that the uplink transmit power of the UE is limited and sends a channel reconfiguration message to the UE. After receiving the channel reconfiguration message, the UE performs channel reconfiguration at a specific time, and completes a switch from a 2 ms TTI to a 10 ms TTI, so that the uplink coverage capacity of the UE is enhanced.

WO 2008/131262 A1 discloses a method and apparatus for dynamic adjustment of uplink transmission time, and further disclosed that a TTI determination component located in a NodeB or in an RNC determines an optimal TTI according to UE TX power headroom and communicates an instruction to the UE to dynamically adjust the TTI window.

### SUMMARY OF THE INVENTION

Embodiments of the present invention provide a method, a system and an apparatus for enhancing uplink coverage capacity of a UE within a short delay.

Embodiments of the present invention provide the following technical solution:
A method for enhancing uplink coverage capacity of a UE disclosed in an embodiment of the present invention includes:
   receiving, by a NodeB, information indicating a power margin reported by a UE, and instructing the UE to transmit uplink data by using a preset scheme after determining that uplink transmit power of the UE is limited according to the information; and
   decoding the received uplink data in a mode corresponding to the preset scheme; wherein,
   the preset scheme is a Transmission Time Interval, TTI, specific sending mode; and
   the step of decoding received uplink data in a mode corresponding to the preset scheme comprises: decoding, by the NodeB, uplink data on an Enhanced Dedicated Physical Control Channel, E-DPCCH, and an Enhanced Dedicated Physical Data Channel, E-DPDCH, received in two TTIs unitedly, wherein the uplink data received in two TTIs comprises data sent by the UE on the E-DPCCH in one TTI separately, and data sent by the UE on the E-DPDCH in a next TTI separately.

A NodeB disclosed in an embodiment of the present invention includes:
a power limit judging unit, adapted to: receive information indicating a power margin reported by a UE, judge whether uplink transmit power of the UE is limited according to the information, and notify a scheme changing unit after determining that the uplink transmit power of the UE is limited; the scheme changing unit, adapted to instruct the UE to transmit uplink data by using a preset scheme; and
an uplink data receiving unit, adapted to decode the received uplink data in a mode corresponding to the preset scheme; wherein
the uplink data receiving unit comprises:
   a second data receiving unit, adapted to decode uplink data on both an Enhanced Dedicated Physical Control Channel, E-DPCCH, and an Enhanced Dedicated Physical Data Channel, E-DPDCH, received in two Transmission Time Intervals, TTIs, unitedly, wherein the uplink data received in two TTIs comprises data sent by the UE on the E-DPCCH in one TTI separately, and data sent by the UE on the E-DPDCH in a next TTI separately.

Another method for enhancing uplink coverage capacity of a UE disclosed in an embodiment of the present invention includes: reporting, by a UE, information indicating a power margin of the UE, wherein the information comprises information about limited uplink transmit power;
receiving, by the UE, an instruction of changing an uplink data transmission mode from a NodeB, wherein the instruction comprises a preset scheme, and a decision of changing an uplink data transmission mode is made by the NodeB; and
transmitting, by the UE, uplink data by using the preset scheme in the instruction; wherein,
the preset scheme is a Transmission Time Interval, TTI, specific sending mode; and
the step of transmitting uplink data by using the preset scheme in the instruction comprises: sending, by the UE, data on an Enhanced Dedicated Physical Control Channel, E-DPCCH, in a TTI separately, and sending data on an Enhanced Dedicated Physical Data Channel, E-DPDCH, in a next TTI separately; and retransmitting data on the E-DPCCH at corresponding transmission time in a next TTI if the UE receives reception failure information from the NodeB, and retransmitting data on the E-DPDCH in another next TTI, wherein the retransmission is repeated until the UE receives reception success information returned by the NodeB or a maximum number of retransmission times is reached.

A UE disclosed in an embodiment of the present invention includes:
a reporting unit , adapted to report information indicating a power margin of a UE, wherein the information comprises information about limited uplink transmit power;
a receiving unit, adapted to receive an instruction of changing an uplink data transmission mode from a NodeB, wherein the instruction comprises a preset scheme, and a decision of changing an uplink data transmission mode is made by the NodeB; and
an uplink data transmitting unit, adapted to transmit uplink data by using the preset scheme in the instruction; wherein,
the preset scheme is a Transmission Time Interval, TTI, specific sending mode and the uplink data transmitting unit comprises:
   a second sending unit, adapted to send data on an Enhanced Dedicated Physical Control Channel, E-DPCCH, in a TTI separately, and send data on an Enhanced Dedicated Physical Data Channel, E-DPDCH, in a next TTI separately; and
   a second feedback unit, adapted to instruct the second sending unit to repeat the operation after receiving reception failure information from the NodeB, wherein the operation is repeated until reception success information is received from the NodeB or a maximum number of retransmission times is reached.

### BRIEF DESCRIPTION OF THE DRAWINGS

To make the technical solution provided in embodiments of the present invention clearer, the accompanying drawings for illustrating the embodiments of the present invention are described in the following. Obviously, the accompanying drawings are merely exemplary, and those skilled in the art may derive other drawings from such accompanying drawings without any creative effort.
FIG. 1 is a flowchart of enhancing uplink coverage capacity of a UE according to an embodiment of the present invention;
FIG. 2 is another flowchart of enhancing uplink coverage capacity of a UE according to an embodiment of the present invention;
FIG. 3 is a flowchart showing an implementation of an embodiment of the present invention;
FIG. 4 is a flowchart showing another implementation of an embodiment of the present invention;
FIG. 5 is a flowchart showing another implementation of an embodiment of the present invention;
FIG. 6 is a flowchart showing another implementation of an embodiment of the present invention;
FIG. 7 is a flowchart showing another implementation of an embodiment of the present invention;
FIG. 8 is a schematic diagram showing a structure of a UE according to an embodiment of the present invention;
FIG. 9 is a schematic diagram showing a structure of a NodeB according to an embodiment of the present invention; and
FIG. 10 is a schematic diagram showing a structure of a system for enhancing uplink coverage capacity of a UE according to an embodiment of the present invention.

### DETAILED DESCRIPTION OF THE EMBODIMENTS

The inventor of the present invention finds that the method in the prior art can enhance uplink coverage capacity of the UE, but it takes a long delay time to finish switching to a 10 ms TTI because a decision needs to be made by an RNC. In this way, data is vulnerable to loss.

The technique solution in embodiments of the present invention is described in detail in the following with reference to the accompanying drawings to provide a thorough understanding of the present invention. Obviously, the drawings and the detailed description are merely exemplary embodiments of the present invention rather than all embodiments. All other embodiments, which may be derived by those skilled in the art from the embodiments given herein without any creative effort, shall fall within the scope of the present invention.

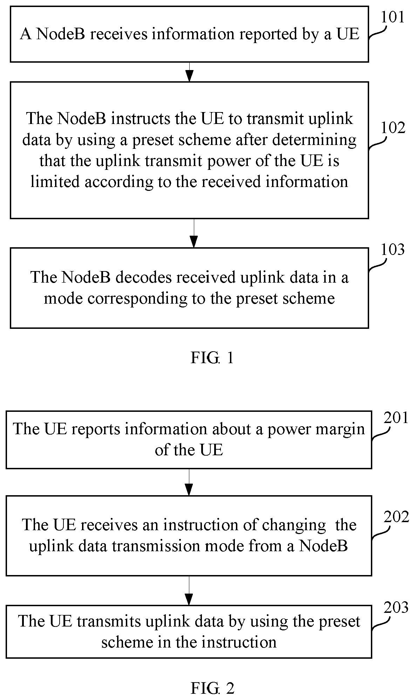

FIG. 1 is a flowchart of enhancing uplink coverage capacity of a UE according to an embodiment of the present invention. The method includes the following steps:
Step 101: ANodeB receives information reported by a UE. The information may indicate a power margin of the UE in Scheduling Information (SI) in an E-DPDCH.
Step 102: The NodeB instructs the UE to transmit uplink data by using a preset scheme after determining that the uplink transmit power of the UE is limited according to the received information.

The preset scheme may be: changing the E-DPDCH coding mode, TTI-specific sending, first-time blind transmission, sending only E-DPDCH data in retransmission, and TTI switching.

Step 103: The NodeB decodes the received uplink data in a mode corresponding to the preset scheme.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay.

FIG. 2 is another flowchart of enhancing uplink coverage capacity of a UE according to an embodiment of the present invention. The method includes the following steps:
Step 201: The UE reports information indicating a power margin of the UE. The information includes information about limited uplink transmit power.
Step 202: The UE receives an instruction of changing the uplink data transmission mode from a NodeB. The instruction includes a preset scheme, and the decision of changing the uplink data transmission mode is made by the NodeB.

The preset scheme may be: changing the E-DPDCH coding mode, TTI-specific sending, first-time blind transmission, sending only E-DPDCH data in retransmission, and TTI switching.

Step 203: The UE transmits uplink data by using the preset scheme in the instruction.

In this embodiment, the UE receives an instruction of changing the uplink data transmission mode from the NodeB, and transmits uplink data by using the preset scheme specified in the instruction. In this way, the decision delay is shortened, and the UE can make an adjustment quickly within a short delay. Therefore, the uplink coverage capacity of the UE is enhanced within a short delay.

The following describes the present invention in detail with reference to specific implementations.

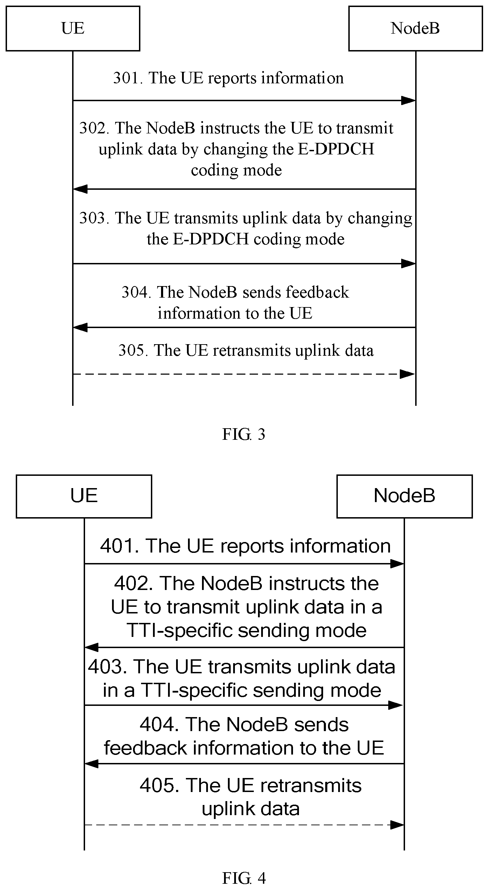

FIG. 3 is a flowchart showing an implementation of an embodiment of the present invention. In this embodiment, the preset scheme is a changing an E-DPDCH coding mode.

Step 301: The UE reports information. The information may indicate a power margin of the UE in an SI (SI) on an E-DPDCH.

Step 302: The NodeB receives the information reported by the UE, and instructs the UE to transmit uplink data by changing the E-DPDCH coding mode after determining that the uplink transmit power of the UE is limited according to the information.

Step 303: After receiving the instruction, the UE transmits uplink data by changing the E-DPDCH coding mode, and the specific operation is as follows:
The UE transmits uplink data to the network side on an Enhanced Dedicated Physical Control Channel (E-DPCCH) and an E-DPDCH simultaneously within a TTI. A convolutional coding mode is adopted on the E-DPDCH; the E-DPCCH bears signaling data, including indicating information about the transport format used by the UE on the E-DPDCH, indicator of newly transmitted or retransmitted data, and a happy bit indicator; and the E-DPDCH bears service data.

Step 304: The NodeB demodulates the service data that the E-DPDCH bears according to the signaling data indicating information on the E-DPCCH. The NodeB decodes the received uplink data in the convolutional coding mode, and sends feedback information to the UE. The NodeB returns an Acknowledgement (ACK) message to the UE if the data on the E-DPDCH is decoded successfully; or returns a Negative Acknowledgement (NACK) message to the UE if the decoding fails.

Step 305: If the UE receives reception failure information from the NodeB, the UE retransmits the uplink data. Specifically, the UE keeps retransmitting the uplink data on the E-DPCCH and the E-DPDCH in the TTI until the UE receives reception success information returned by the NodeB or the maximum number of retransmission times is reached.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay. In addition, the UE changes the E-DPDCH coding mode from Turbo coding to convolutional coding, the convolutional coding can get a better coding gain than the Turbo coding when the transport block is short, so that the uplink coverage of the UE is further enhanced.

FIG. 4 is a flowchart showing another implementation of an embodiment of the present invention. In this embodiment, a TTI-specific sending mode is adopted.

Step 401: The UE reports information. The information may indicate a power margin of the UE in an SI (SI) on an E-DPDCH.

Step 402: The NodeB receives the information reported by the UE, and instructs the UE to transmit uplink data by using a TTI-specific sending mode after determining that the uplink transmit power of the UE is limited. That is, the UE sends data on the E-DPCCH in one TTI, and sends data on the E-DPDCH in another TTI.

Step 403: After receiving the instruction, the UE transmits uplink data in a TTI-specific sending mode, and the specific operation is as follows:
The UE sends data on the E-DPCCH in one TTI separately. The E-DPCCH bears signaling data, including indicating information about the transport format used by the UE on the E-DPDCH, indicator of newly transmitted or retransmitted data, and a happy bit indicator.

After transmitting the E-DPCCH data, the UE sends data on the E-DPDCH in the next TTI separately. The E-DPDCH bears service data, and adopts a Turbo coding mode or a convolutional coding mode.

Step 404: The NodeB decodes the uplink data on the E-DPCCH and the E-DPDCH received in the two TTIs unitedly and sends feedback information to the UE.

Step 405: If the UE receives reception failure information from the NodeB, the UE retransmits the uplink data. Specifically, the UE keeps retransmitting data on the E-DPCCH in the next TTI and retransmitting data on the E-DPDCH in another next TTI after retransmission of data on the E-DPCCH until the UE receives reception success information returned by the NodeB or the maximum number of retransmission times is reached. For example, the UE sends data on the E-DPCCH in HARQ process 2, and sends data on the E-DPDCH in process 3. If the UE subsequently receives reception failure information from the NodeB indicating failure of receiving data in the two processes, the UE retransmits data on the E-DPCCH in process 2 corresponding to the next Round Trip Time (RTT, Round Trip Time) and retransmits data on the E-DPDCH in process 3 to ensure a one-to-one mapping between data on the E-DPCCH and data on the E-DPDCH.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay. In addition, the data that needs to be transmitted in each TTI is decreased, the UE can use all the remaining transmit power in each TTI to send only data on the E-DPCCH or to send only data on the E-DPDCH, so that the gain is increased and the uplink coverage of the UE is further enhanced.

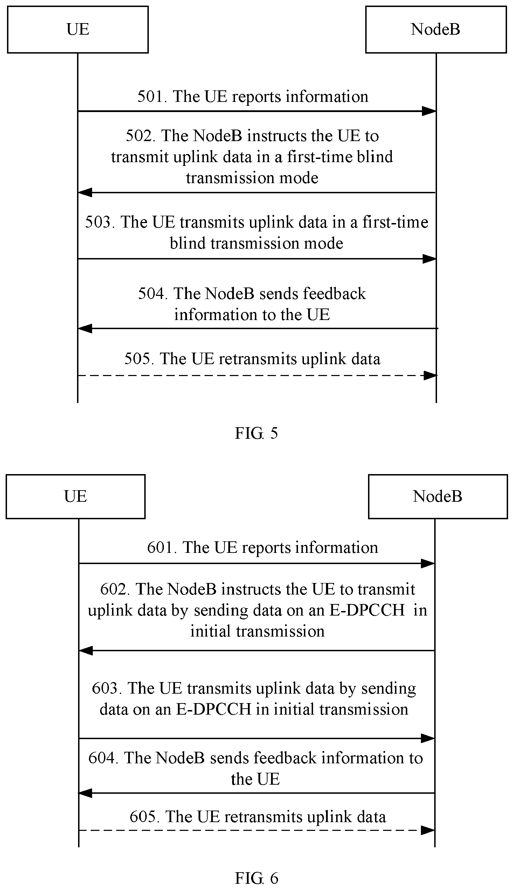

FIG. 5 is a flowchart showing another implementation of an embodiment of the present invention. In this embodiment, a first-time blind transmission mode is adopted.

In this embodiment, an RNC presets an Enhanced Transport Format Combination (E-TFC) subset in a NodeB and a UE. The E-TFC subset includes index numbers corresponding to different transport block sizes.

Step 501: The UE reports information. The information may indicate a power margin of the UE in an SI on an E-DPDCH.

Step 502: The NodeB receives the information reported by the UE, and instructs the UE to transmit uplink data in a first-time blind transmission mode after determining that the uplink transmit power of the UE is limited.

Step 503: After receiving the instruction, the UE transmits uplink data in a first-time blind transmission mode, and the specific operation is as follows:
When transmitting new data, the UE selects the corresponding transport block in the configured E-TFC subset according to data amount allowed by a current serving grant (Serving Grant) value, and sends the selected data on the E-DPDCH in a TTI. A Turbo coding mode is adopted on the E-DPDCH.

Step 504: If the NodeB receives only uplink data on the E-DPDCH from the UE, the NodeB compares all transport blocks in the configured E-TFC subset with the transport blocks in the received data on the E-DPDCH respectively, and decodes the data by using the transport block that matches the E-DPDCH. That is, the NodeB blindly detects the received data on the E-DPDCH according to the configured E-TFC subset, determines the size of the transport block used by the UE, uses the corresponding transport block to decode the data, and sends feedback information to the UE. The NodeB returns an ACK message if the decoding succeeds or returns a NACK message if the decoding fails.

Step 505: If the UE receives reception failure information (for example, a NACK message) from the NodeB, the UE retransmits the uplink data. Specifically, the UE retransmits the uplink data on the E-DPCCH and the E-DPDCH in the next TTI. The E-DPCCH carries the format indicating information about the transport block selected by the UE. For example, after receiving a NACK message, the UE sends data on the E-DPCCH in HARQ process 2, and sends data on the E-DPDCH in process 3. If the UE subsequently receives reception failure information from the NodeB indicating failure of receiving the data in the two processes, the UE retransmits data on the E-DPCCH in process 2 corresponding to the next Round Trip Time (RTT, Round Trip Time) and retransmits data on the E-DPDCH in process 3 to ensure a one-to-one mapping between data on the E-DPCCH and data on the E-DPDCH.

If the NodeB receives uplink data that includes data on the E-DPCCH and data on the E-DPDCH, the NodeB decodes the uplink data on the E-DPDCH according to the transport format indicator provided on the E-DPCCH.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay. In addition, when transmitting new data, the UE selects a predefined transport block in the configured E-TFC subset, and sends only data on the E-DPDCH in a TTI, without transmitting data on the E-DPCCH. The data that needs to be transmitted in each TTI is decreased, the UE can use all the remaining transmit power in each TTI to send only data on the E-DPDCH, so that the gain is increased and the uplink coverage of the UE is further enhanced.

FIG. 6 is a flowchart showing another implementation of an embodiment of the present invention. In this embodiment, sending only the E-DPDCH data in a retransmission mode is adopted.

Step 601: The UE reports information. The information may indicate a power margin of the UE in an SI on an E-DPDCH.

Step 602: The NodeB receives the information reported by the UE, and instructs the UE to transmit uplink data by sending data on the E-DPCCH in initial transmission after determining that the uplink transmit power of the UE is limited.

Step 603: After receiving the instruction, the UE transmits uplink data by sending data on the E-DPCCH in an initial transmission, and the specific operation is as follows:
When transmitting new data, the UE transmits uplink data on both the E-DPCCH and the E-DPDCH to the network side simultaneously in one TTI. A Turbo coding mode or a convolutional coding mode is adopted on the E-DPDCH.

Step 604: The NodeB sends feedback information to the UE.

Step 605: If the UE receives no feedback information from the NodeB, the UE retransmits the uplink data. Specifically, the UE keeps retransmitting the uplink data on the E-DPCCH and the E-DPDCH until the UE receives reception information (success or failure) returned by the NodeB or the maximum number of retransmission times is reached. For example, the UE sends data on the E-DPCCH in HARQ process 2, and sends data on the E-DPDCH in process 3. If the UE subsequently receives reception failure information from the NodeB indicating failure of receiving the data in the two processes, the UE retransmits data on the E-DPCCH in process 2 corresponding to the next RTT and retransmits data on the E-DPDCH in process 3 to ensure a one-to-one mapping between data on the E-DPCCH and data on the E-DPDCH.

If the UE receives reception failure information from the NodeB, the UE keeps retransmitting only the uplink data on the E-DPDCH until the UE receives reception success information returned by the NodeB or the maximum number of retransmission times is reached.

After receiving the uplink data from the UE initially, the NodeB decodes the data on the E-DPDCH according to the format indicator provided on the E-DPCCH.

The NodeB records the decoding format indicator provided on the E-DPCCH.

After receiving the uplink data from the UE again, the NodeB decodes the data on the E-DPDCH according to the recorded decoding format indicator.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay. In addition, when transmitting new data, the UE initially transmits the data on both the E-DPCCH and the E-DPDCH simultaneously in one TTI. If the initial transmission fails and the network returns reception failure information, the UE needs to retransmit only the data on the E-DPDCH in a TTI subsequently. The data that needs to be retransmitted in each TTI subsequently is decreased, the UE can use all the remaining transmit power in each TTI to send only data on the E-DPDCH, so that the gain is increased and the uplink coverage of the UE is further enhanced.

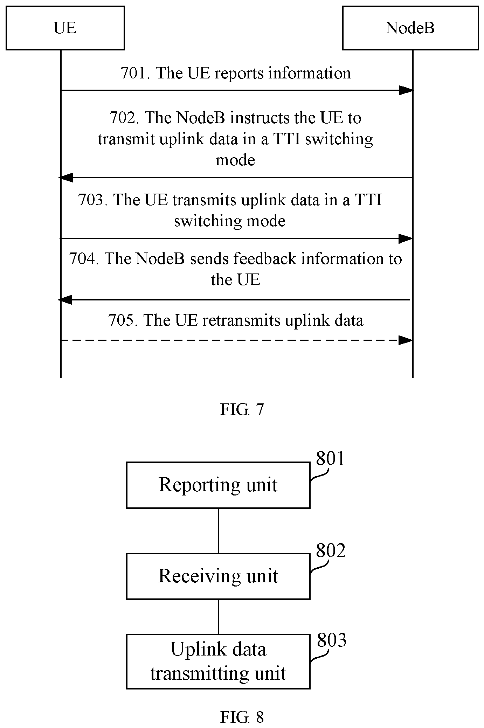

FIG. 7 is a flowchart showing another implementation of an embodiment of the present invention. In this embodiment, a TTI switching mode is adopted.

Step 701: The UE reports information. The information may indicate a power margin of the UE in an SI on an E-DPDCH.

Step 702: The NodeB determines that the uplink transmit power of the UE is limited according to the information reported by the UE, and instructs the UE to transmit uplink data in a TTI switching mode.

Step 703: After receiving the instruction, the UE transmits uplink data in a TTI switching mode, and the specific operation is as follows:
The UE switches the current TTI (for example, a 2 ms TTI) to the TTI with a length specified in the instruction, for example, to a 10 ms TTI specified in the instruction.

The UE transmits uplink data on both the E-DPCCH and the E-DPDCH to the network side simultaneously in the TTI with a specified length (for example, a 10 ms TTI). A Turbo coding mode is adopted on the E-DPDCH.

Step 704: The NodeB demodulates the service data that the E-DPDCH bears according to the signaling data indicating information on the E-DPCCH. The NodeB decodes the received uplink data in the Turbo coding mode, and sends feedback information to the UE. The NodeB returns an ACK message to the UE if the data on the E-DPDCH is decoded successfully, or returns a NACK message to the UE if the decoding fails.

Step 705: If the UE receives reception failure information from the NodeB, the UE retransmits the uplink data. Specifically, the UE keeps retransmitting the uplink data on the E-DPCCH and the E-DPDCH in the TTI of a specified length (for example a 10 ms TTI) until the UE receives reception success information returned by the NodeB or the maximum number of retransmission times is reached.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay. In addition, because the TTI is longer, the uplink coverage of the UE is further enhanced.

As shown in FIG. 8, a UE provided in an embodiment of the present invention includes:
a reporting unit 801, adapted to report information indicating a power margin of a UE, where the information includes information about limited uplink transmit power;
a receiving unit 802, adapted to receive an instruction of changing an uplink data transmission mode from a NodeB, where the instruction includes a preset scheme and the decision of changing the uplink data transmission mode is made by the NodeB; and
an uplink data transmitting unit 803, adapted to transmit uplink data by using the preset scheme in the instruction.

When the preset scheme is to change the E-DPDCH coding mode, the uplink data transmitting unit 803 includes:
a first sending unit, adapted to transmit uplink data on both the E-DPCCH and the E-DPDCH to the network side simultaneously in a TTI, where a convolutional coding mode is adopted on the E-DPDCH; and
a first feedback unit, adapted to instruct the first sending unit to repeat the operation after receiving reception failure information from the NodeB, where the operation is repeated until reception success information is received from the NodeB or the maximum number of retransmission times is reached.

When the preset scheme is a TTI-specific sending mode, the uplink data transmitting unit 803 includes:
a second sending unit, adapted to send data on the E-DPCCH in a TTI separately, and send data on the E-DPDCH in the next TTI separately; and
a second feedback unit, adapted to instruct the second sending unit to repeat the operation after receiving reception failure information from the NodeB, where the operation is repeated until reception success information is received from the NodeB or the maximum number of retransmission times is reached.

When the preset scheme is a first-time blind transmission mode, the uplink data transmitting unit 803 includes:
a third sending unit, adapted to select a data block with a size allowed by a current serving grant value in a configured E-TFC subset, and send this transport block of the E-DPCCH data in a TTI;
a third feedback unit, adapted to instruct a fourth sending unit to perform operations after receiving reception failure information from the NodeB; and
the fourth sending unit, adapted to retransmit uplink data on both the E-DPCCH and the E-DPDCH in a TTI, where the E-DPCCH carries the format indicating information about the transport block that is selected by the UE and capable of enhancing uplink coverage capacity.

When the preset scheme is to send only data on the E-DPDCH in retransmission, the uplink data transmitting unit 803 includes:
a fifth sending unit, adapted to transmit uplink data on both the E-DPCCH and the E-DPDCH to the network side simultaneously in a TTI;
a fourth feedback unit, adapted to: instruct the fifth sending unit to repeat the operation if no feedback information is received from the NodeB, where the operation is repeated until reception information is received from the NodeB or the maximum number of retransmission times is reached; and instruct a sixth sending unit to repeat the operation if reception failure information is received from the NodeB, where the operation is repeated until reception success information is received from the NodeB or the maximum number of retransmission times is reached; and
the sixth sending unit, adapted to retransmit the uplink data on the E-DPDCH.

When the preset scheme is a TTI switching mode, the uplink data transmitting unit 803 includes:
a switching unit, adapted to switch the current TTI to the TTI with a length specified in the instruction sent by the NodeB;
a seventh sending unit, adapted to transmit uplink data on both the E-DPCCH and the E-DPDCH to the network side simultaneously in the TTI with the specified length; and
a fifth feedback unit, adapted to instruct the seventh sending unit to repeat the operation after receiving reception failure information from the NodeB, where the operation is repeated until reception success information is received from the NodeB or the maximum number of retransmission times is reached.

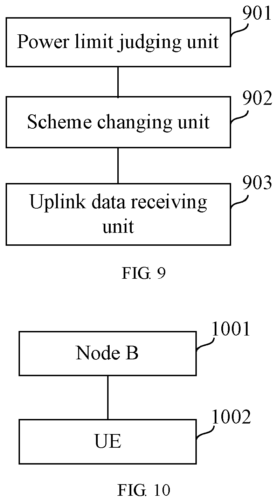

As shown in FIG. 9, a NodeB provided in an embodiment of the present invention includes:
a power limit judging unit 901, adapted to: receive information reported by a UE, judge whether uplink transmit power of the UE is limited according to the information, and notify a scheme changing unit 902 after determining that the uplink transmit power of the UE is limited;
the scheme changing unit 902, adapted to instruct the UE to transmit uplink data by using a preset scheme; and
an uplink data receiving unit 903, adapted to decode received uplink data in a mode corresponding to the preset scheme.

When the preset scheme is to change the E-DPDCH coding mode, the uplink data receiving unit 903 may include:
a first data receiving unit, adapted to decode received uplink data in a convolutional coding mode.

When the preset scheme is a TTI-specific sending mode, the uplink data receiving unit 903 may include:
a second data receiving unit, adapted to decode uplink data on both the E-DPCCH and the E-DPDCH received in the two TTIs.

When the preset scheme is a first-time blind transmission mode, the uplink data receiving unit 903 may include:
a third data receiving unit, adapted to compare all transport blocks in the configured E-TFC subset with the transport blocks in the received data on the E-DPDCH respectively after receiving the uplink data from the UE, and decode the data by using the transport block that matches the E-DPDCH; and
a fourth data receiving unit, adapted to decode the uplink data on the E-DPDCH according to the transport format indicator provided on the E-DPCCH after receiving the uplink data on both the E-DPCCH and the E-DPDCH.

When the preset scheme is to send only data on the E-DPDCH in retransmission, the uplink data receiving unit 903 may include:
a fifth data receiving unit, adapted to decode the data on the E-DPDCH by using a format indicator provided on the E-DPCCH after receiving the uplink data from the UE initially;
a recording unit, adapted to record the decoding format indicator provided on the E-DPCCH; and
a sixth data receiving unit, adapted to obtain the recorded decoding format indicator from the recording unit after receiving the uplink data from the UE again, and decode the data on the E-DPDCH.

When the preset scheme is a TTI switching mode, the uplink data receiving unit 903 is the same as the present solution.

In this embodiment, the NodeB instructs the UE to change the mode of transmitting uplink data after determining that the uplink transmit power of the UE is limited. In this way, the decision delay is shortened, and the UE can make an adjustment quickly within a short delay. Therefore, the uplink coverage capacity of the UE is enhanced within a short delay.

As shown in FIG. 10, a system for enhancing uplink coverage capacity of a UE provided in an embodiment of the present invention includes:
a NodeB 1001, adapted to receive information reported by a UE, instruct the UE to transmit uplink data by using a preset scheme after determining that the uplink transmit power of the UE is limited, and decode received uplink data in a mode corresponding to a preset scheme, where the preset scheme may be: changing the E-DPDCH coding mode, TTI-specific sending, first-time blind transmission, sending only data on the E-DPDCH in retransmission, and TTI switching; and
a UE 1002, adapted to transmit uplink data according to the scheme instructed by the NodeB.

It may be understandable to those skilled in the art that the accompanying drawings are only schematic diagrams of the exemplary embodiments, and the modules or processes in the accompanying drawings are not mandatory for implementing the present invention.

It may be understandable to those skilled in the art that the modules in an apparatus provided in an embodiment of the present invention may be distributed in the apparatus described herein, or may be located in one or more apparatuses different from the apparatus described herein. The modules provided in embodiments may be combined into one module, or split into multiple submodules.

Persons of ordinary skill in the art may understand that all or part of the steps of the method in embodiments of the present invention may be carried out by a program instructing relevant hardware. The program may be stored in computer readable storage medium such as a Read Only Memory (ROM), a Random Access Memory (RAM), a magnetic disk, or a Compact Disk-Read Only Memory (CD-ROM).

The preceding descriptions are merely exemplary embodiments of the present invention, but not intended to limit the scope of the present invention. Any modification, equivalent replacement, or improvement made without departing from the principles of the present invention shall fall within the protection scope of the present invention.

## Claims

1. A method for enhancing uplink coverage capacity of a User Equipment, UE (1001), comprising:
receiving, by a NodeB (1002), information indicating a power margin reported by the UE (1001), and instructing the UE (1001) to transmit uplink data by using a preset scheme after determining that uplink transmit power of the UE (1001) is limited according to the information; and decoding, by the NodeB (1002), received uplink data in a mode corresponding to the preset scheme;
**characterized in that**:
the preset scheme is a Transmission Time Interval, TTI, specific sending mode; and
the step of decoding received uplink data in a mode corresponding to the preset scheme comprises: decoding, by the NodeB (1002), uplink data on an Enhanced Dedicated Physical Control Channel, E-DPCCH, and an Enhanced Dedicated Physical Data Channel, E-DPDCH, received in two TTIs unitedly, wherein the uplink data received in two TTIs comprises data sent by the UE on the E-DPCCH in one TTI separately, and data sent by the UE on the E-DPDCH in a next TTI separately.

2. A method for enhancing uplink coverage capacity of a User Equipment, UE (1001), comprising:
reporting, by a UE (1001), information indicating a power margin of the UE (1001), wherein the information comprises information about limited uplink transmit power;
receiving, by the UE (1001), an instruction of changing an uplink data transmission mode from a NodeB (1002), wherein the instruction comprises a preset scheme, and a decision of changing an uplink data transmission mode is made by the NodeB (1002); and
transmitting, by the UE (1001), uplink data by using the preset scheme in the instruction;
**characterized in that**:
the preset scheme is a Transmission Time Interval, TTI, specific sending mode; and
the step of transmitting uplink data by using the preset scheme in the instruction comprises: sending, by the UE (1001), data on an Enhanced Dedicated Physical Control Channel, E-DPCCH, in a TTI separately, and sending data on an Enhanced Dedicated Physical Data Channel, E-DPDCH, in a next TTI separately; and retransmitting data on the E-DPCCH at corresponding transmission time in a next TTI if the UE (1001) receives reception failure information from the NodeB, and retransmitting data on the E-DPDCH in another next TTI, wherein the retransmission is repeated until the UE (1001) receives reception success information returned by the NodeB or a maximum number of retransmission times is reached.

3. A User Equipment, UE (1001), comprising:
a reporting unit (801), adapted to report information indicating a power margin of a UE (1001), wherein the information comprises information about limited uplink transmit power;
a receiving unit (802), adapted to receive an instruction of changing an uplink data transmission mode from a NodeB (1002), wherein the instruction comprises a preset scheme, and a decision of changing an uplink data transmission mode is made by the NodeB (1002); and
an uplink data transmitting unit (803), adapted to transmit uplink data by using the preset scheme in the instruction;
**characterized in that**:
the preset scheme is a Transmission Time Interval, TTI, specific sending mode and the uplink data transmitting unit (803) comprises:
a second sending unit, adapted to send data on an Enhanced Dedicated Physical Control Channel, E-DPCCH, in a TTI separately, and send data on an Enhanced Dedicated Physical Data Channel, E-DPDCH, in a next TTI separately; and
a second feedback unit, adapted to instruct the second sending unit to repeat the operation after receiving reception failure information from the NodeB (1002), wherein the operation is repeated until reception success information is received from the NodeB (1002) or a maximum number of retransmission times is reached.

4. A NodeB (1002), comprising:
a power limit judging unit (901), adapted to: receive information indicating a power margin reported by a User Equipment, UE (1001), judge whether uplink transmit power of the UE (1001) is limited according to the information, and notify a scheme changing unit after determining that the uplink transmit power of the UE (1001) is limited;
the scheme changing unit (902), adapted to instruct the UE (1001) to transmit uplink data by using a preset scheme; and
an uplink data receiving unit (903), adapted to decode received uplink data in a mode corresponding to the preset scheme;
**characterized in that**,
the uplink data receiving unit (903) comprises:
a second data receiving unit, adapted to decode uplink data on both an Enhanced Dedicated Physical Control Channel, E-DPCCH, and an Enhanced Dedicated Physical Data Channel, E-DPDCH, received in two Transmission Time Intervals, TTIs, unitedly, wherein the uplink data received in two TTIs comprises data sent by the UE on the E-DPCCH in one TTI separately, and data sent by the UE on the E-DPDCH in a next TTI separately.

## Patentansprüche

1. Verfahren zur Erweiterung der Uplink-Abdeckungskapazität einer Benutzereinrichtung UE (1001), umfassend:
Empfangen durch einen NodeB (1002) von Informationen, die eine durch die UE (1001) gemeldete Leistungsreserve anzeigen und die UE (1001) anweisen, Uplink-Daten durch Verwenden eines voreingestellten Schemas zu übertragen nach Bestimmen, dass Uplink-Sendeleistung der UE (1001) gemäß den Informationen begrenzt ist; und Decodieren durch den NodeB (1002) von empfangenen Uplink-Daten in einem dem voreingestellten Schema entsprechenden Modus;
**dadurch gekennzeichnet, dass**:
das voreingestellte Schema ein TTI-spezifischer Sendemodus ist (TTI = Transmission Time Interval - Übertragungszeitabstand); und der Schritt von Decodieren empfangener Uplink-Daten in einem dem voreingestellten Schema entsprechenden Modus umfasst: Decodieren durch den NodeB (1002) von gemeinsam in zwei TTI empfangenen Uplink-Daten auf einem erweiterten dedizierten physikalischen Organisationskanal E-DPCCH (Enhanced Dedicated Physical Control Channel) und einem erweiterten dedizierten physikalischen Datenkanal E-DPDCH (Enhanced Dedicated Physical Data Channel), wobei die in zwei TTI empfangenen Uplink-Daten durch die UE auf dem E-DPCCH in einem TTI getrennt gesendete Daten und durch die UE auf dem E-DPDCH in einem nächsten TTI getrennt gesendete Daten umfassen.

2. Verfahren zur Erweiterung der Uplink-Abdeckungskapazität einer Benutzereinrichtung UE (1001), umfassend:
Melden durch eine UE (1001) von Informationen, die eine Leistungsreserve der UE (1001) anzeigen, wobei die Informationen Informationen über begrenzte Uplink-Sendeleistung umfassen;
Empfangen durch die UE (1001) einer Anweisung zum Ändern eines Uplink-Datenübertragungsmodus von einem NodeB (1002), wobei die Anweisung ein voreingestelltes Schema umfasst und eine Entscheidung zum Ändern eines Uplink-Datenübertragungsmodus durch den NodeB (1002) getroffen wird; und
Übertragen durch die UE (1001) von Uplink-Daten durch Verwenden des voreingestellten Schemas in der Anweisung;
**dadurch gekennzeichnet, dass**:
das voreingestellte Schema ein TTI-spezifischer Sendemodus ist (TTI = Transmission Time Intervall - Übertragungszeitabstand); und
der Schritt des Übertragens von Uplink-Daten durch Verwenden des voreingestellten Schemas in der Anweisung Folgendes umfasst: getrenntes Senden durch die UE (1001) von Daten auf einem erweiterten dedizierten physikalischen Organisationskanal E-DPCCH (Enhanced Dedicated Physical Control Channel) in einem TTI und getrenntes Senden von Daten auf einem erweiterten dedizierten physikalischen Datenkanal E-DPDCH (Enhanced Dedicated Physical Control Channel) in einem nächsten TTI; und erneutes Übertragen von Daten auf dem E-DPCCH zu einer entsprechenden Übertragungszeit in einem nächsten TTI, wenn die UE (1001) Empfangsausfallinformationen vom NodeB empfängt und erneutes Übertragen von Daten auf dem E-DPDCH in einem anderen nächsten TTI, wobei die Neuübertragung wiederholt wird, bis die UE (1001) durch den NodeB zurückgesandte Empfangserfolgsinformationen empfängt oder eine Höchstzahl von Wiederholungszeiten erreicht ist.

3. Benutzereinrichtung UE (1001), umfassend:
eine Meldeeinheit (801), eingerichtet zum Melden von Informationen, die eine Leistungsreserve einer UE (1001) anzeigen, wobei die Informationen Informationen über begrenzte Uplink-Sendeleistung umfassen;
eine Empfangseinheit (802), eingerichtet zum Empfangen einer Anweisung zum Ändern eines Uplink-Datenübertragungsmodus von einem NodeB (1002), wobei die Anweisung ein voreingestelltes Schema umfasst, und eine Entscheidung zum Ändern eines Uplink-Datenübertragungsmodus durch den NodeB (1002) getroffen wird; und eine Uplink-Datenübertragungseinheit (803), eingerichtet zum Übertragen von Uplink-Daten durch Verwendung des voreingestellten Schemas in der Anweisung;
**dadurch gekennzeichnet, dass**:
das voreingestellte Schema ein TTI-spezifischer Sendemodus (TTI - Transmission Time Intervall - Übertragungszeitabstand) ist und die Uplink-Datenübertragungseinheit (803) Folgendes umfasst:
eine zweite Sendeeinheit, eingerichtet zum getrennten Senden von Daten auf einem erweiterten dedizierten physikalischen Organisationskanal E-DPCCH (Enhanced Dedicated Physical Control Channel) in einem TTI und getrennten Senden von Daten auf einem erweiterten dedizierten physikalischen Datenkanal E-DPDCH (Enhanced Dedicated Physical Data Channel) in einem nächsten TTI; und
eine zweite Rückkopplungseinheit, eingerichtet zum Anweisen der zweiten Sendeeinheit zum Wiederholen der Operation nach Empfangen von Empfangsausfallinformationen vom NodeB (1002), wobei die Operation wiederholt wird, bis Empfangserfolgsinformationen vom NodeB (1002) empfangen werden oder eine Höchstzahl von Wiederholungszeiten erreicht ist.

4. NodeB (1002), umfassend:
eine Leistungsgrenzenbeurteilungseinheit (901), eingerichtet zum Empfangen von Informationen, die eine durch eine Benutzereinrichtung UE (1001) gemeldete Leistungsreserve anzeigen, Beurteilen, ob Uplink-Sendeleistung der UE (1001) gemäß den Informationen begrenzt ist und Benachrichtigen einer Schemenänderungseinheit nach Bestimmen, dass die Uplink-Sendeleistung der UE (1001) begrenzt ist;
die Schemenänderungseinheit (902), eingerichtet zum Anweisen der UE (1001) zum Übertragen von Uplink-Daten durch Verwenden eines voreingestellten Schemas; und eine Uplink-Datenempfangseinheit (903), eingerichtet zum Decodieren empfangener Uplink-Daten in einem dem voreingestellten Schema entsprechenden Modus;
**dadurch gekennzeichnet, dass**
die Uplink-Datenempfangseinheit (903) Folgendes umfasst:
eine zweite Datenempfangseinheit, eingerichtet zum Decodieren von gemeinsam in zwei Übertragungszeitabständen TTI empfangenen Uplink-Daten sowohl auf einem erweiterten dedizierten physikalischen Organisationskanal E-DPCCH (Enhanced Dedicated Physical Control Channel) als auch auf einem erweiterten dedizierten physikalischen Datenkanal E-DPDCH (Enhanced Dedicated Physical Data Channel), wobei die in zwei TTI empfangenen Uplink-Daten durch die UE in einem TTI auf dem E-DPCCH getrennt gesendete Daten und durch die UE auf dem E-DPDCH in einem nächsten TTI getrennt gesendete Daten umfassen.

## Revendications

1. Procédé permettant d'améliorer une capacité de couverture de liaison montante d'un équipement utilisateur, UE (1001), comprenant les étapes suivantes :
recevoir, par un NoeudB (1002), des informations indiquant une marge de puissance transmise par l'UE (1001), et ordonner à l'UE (1001) de transmettre des données de liaison montante en utilisant un schéma prédéfini après avoir déterminé qu'une puissance de transmission de liaison montante de l'UE (1001) est limitée selon les informations ; et décoder, par le NoeudB (1002), des données de liaison montante reçues dans un mode correspondant au schéma prédéfini ;
**caractérisé en ce que** :
le schéma prédéfini est un mode d'envoi spécifique à un intervalle de temps de transmission, TTI ; et
l'étape consistant à décoder des données de liaison montante reçues dans un mode correspondant au schéma prédéfini comprend : décoder, par le NoeudB (1002), des données de liaison montante sur un canal de contrôle physique dédié amélioré, E-DPCCH, et sur un canal de données physique dédié amélioré, E-DPDCH, reçues dans deux TTI conjointement, les données de liaison montante reçues dans deux TTI comportant des données envoyées par l'UE sur le E-DPCCH dans un TTI séparément, et des données envoyées par l'UE sur le E-DPDCH dans un TTI suivant séparément.

2. Procédé permettant d'améliorer une capacité de couverture de liaison montante d'un équipement utilisateur, UE (1001), comprenant les étapes suivantes :
transmettre, par un UE (1001), des informations indiquant une marge de puissance de l'UE (1001), les informations comportant des informations concernant une puissance de transmission de liaison montante limitée ;
recevoir, par l'UE (1001), une instruction de changement d'un mode de transmission de données de liaison montante à partir d'un NoeudB (1002), l'instruction comportant un schéma prédéfini, et une décision de changer un mode de transmission de données de liaison montante étant prise par le NoeudB (1002) ; et
transmettre, par l'UE (1001), des données de liaison montante en utilisant le schéma prédéfini dans l'instruction ;
**caractérisé en ce que** :
le schéma prédéfini est un mode d'envoi spécifique à un intervalle de temps de transmission, TTI ; et
l'étape consistant à transmettre des données de liaison montante en utilisant le schéma prédéfini dans l'instruction comprend : envoyer, par l'UE (1001), des données sur un canal de contrôle physique dédié amélioré, E-DPCCH, dans un TTI séparément, et envoyer des données sur un canal de données physique dédié amélioré, E-DPDCH, dans un TTI suivant séparément ; et retransmettre des données sur le E-DPCCH à un temps de transmission correspondant dans un TTI suivant si l'UE (1001) reçoit des informations d'échec de réception à partir du NoeudB, et retransmettre des données sur le E-DPDCH dans un autre TTI suivant, la retransmission étant répétée jusqu'à ce que l'UE (1001) reçoive des informations de succès de réception retournées par le NoeudB ou qu'un nombre maximum de retransmissions ait été atteint.

3. Équipement utilisateur, UE (1001), comprenant :
une unité de transmission (801), conçue pour transmettre des informations indiquant une marge de puissance d'un UE (1001), les informations comportant des informations concernant une puissance de transmission de liaison montante limitée ; une unité de réception (802), conçue pour recevoir une instruction de changement d'un mode de transmission de données de liaison montante à partir d'un NoeudB (1002), l'instruction comportant un schéma prédéfini, et une décision de changer un mode de transmission de données de liaison montante étant prise par le NoeudB (1002) ; et
une unité de transmission de données de liaison montante (803), conçue pour transmettre des données de liaison montante en utilisant le schéma prédéfini dans l'instruction ;
**caractérisé en ce que** :
le schéma prédéfini est un mode d'envoi spécifique à un intervalle de temps de transmission, TTI, et l'unité de transmission de données de liaison montante (803) comporte :
une deuxième unité d'envoi, conçue pour envoyer des données sur un canal de contrôle physique dédié amélioré, E-DPCCH, dans un TTI séparément, et envoyer des données sur un canal de données physique dédié amélioré, E-DPDCH, dans un TTI suivant séparément ; et
une deuxième unité de rétroaction, conçue pour ordonner à la deuxième unité d'envoi de répéter l'opération après avoir reçu des informations d'échec de réception à partir du NoeudB (1002), l'opération étant répétée jusqu'à ce que des informations de succès de réception soient reçues à partir du NoeudB (1002) ou qu'un nombre maximum de retransmissions ait été atteint.

4. NoeudB (1002), comprenant:
une unité de jugement de limite de puissance (901), conçue pour : recevoir des informations indiquant une marge de puissance transmise par un équipement utilisateur, UE (1001), juger si une puissance de transmission de liaison montante de l'UE (1001) est limitée selon les informations, et notifier une unité de changement de schéma après avoir déterminé que la puissance de transmission de liaison montante de l'UE (1001) est limitée ;
l'unité de changement de schéma (902), conçue pour ordonner à l'UE (1001) de transmettre des données de liaison montante en utilisant un schéma prédéfini ; et
une unité de réception de données de liaison montante (903), conçue pour décoder des données de liaison montante reçues dans un mode correspondant au schéma prédéfini ;
**caractérisé en ce que**,
l'unité de réception de données de liaison montante (903) comprend :
une deuxième unité de réception de données, conçue pour décoder des données de liaison montante sur un canal de contrôle physique dédié amélioré, E-DPCCH, ainsi que sur un canal de données physique dédié amélioré, E-DPDCH, reçues dans deux intervalles de temps de transmission, TTI, conjointement, les données de liaison montante reçues dans deux TTI comportant des données envoyées par l'UE sur le E-DPCCH dans un TTI séparément, et des données envoyées par l'UE sur le E-DPDCH dans un TTI suivant séparément.
